# EUROPEAN PATENT SPECIFICATION

(11) **EP 4 247 219 B1**
(45) Date of publication and mention of the grant of the patent: **13.08.2025**
(21) Application number: 21802754.8
(22) Date of filing: 09.11.2021
(51) Int. Cl.: A46B 15/00, A46B 13/02, A61C 17/16, A61C 17/34, A61C 17/22, A61C 17/36

(54) **WEAR-OUT DETECTION FOR AN ORAL CARE DEVICE**
VERSCHLEISSERKENNUNG FÜR EIN MUNDPFLEGEGERÄT
DÉTECTION D'USURE POUR DISPOSITIFS D'HYGIÈNE BUCCALE

(30) Priority: 19.11.2020 EP 20208675; 21.06.2021 EP 21180696
(43) Date of publication of application: 27.09.2023
(73) Proprietor: Koninklijke Philips N.V., 5656 AG Eindhoven (NL)
(72) Inventor: JOHNSON, Mark Thomas, 5656 AG Eindhoven (NL); GERHARDT, Lutz Christian, 5656 AG Eindhoven (NL)
(74) Representative: Philips Intellectual Property & Standards
(86) International application number: PCT/EP2021/080998
(87) International publication number: WO 2022/106248

(56) References cited:
- CN-B- 106 510 881
- US-A1- 2008 256 725
- US-A1- 2012 171 657
- US-A1- 2017 091 938
- US-A1- 2020 260 859
- US-B1- 6 536 068

## Description

### BACKGROUND OF THE INVENTION

US2020260859A1 discloses a system and method of determining and notifying a user when to replace a worn dental cleaning head, comprises receiving, from a sensor, at least one measured value; calculating, using the measured value, a burn metric of the dental cleaning head; modeling, using the burn metric, an estimated lifetime of the dental cleaning head; determining, from the lifetime model, whether the dental cleaning head is in need of replacement; and notifying the user upon determining that the dental cleaning head is in need of replacement.

CN106510881A discloses an indication method for judging whether a brush head needs to be replaced or not according to the actual tooth-brushing usage situation of a user. The indication method comprises the steps of obtaining tooth-brushing data of the user, working out the loss value of the brush head according to the tooth-brushing data of the user, and sending the indication that the brush head needs to be replaced to the user when the loss value of the brush head is larger than or equal to a predefined threshold.

Within the field of oral care devices, it is valuable to be able to detect wear-out of relevant operative components of the device, which causes reduction of the efficacy of the oral care function. By way of example, for oral cleaning devices, cleaning efficacy can diminish in time. This can be caused by physical wear, deformation or degradation of cleaning elements such as bristles, e.g. in toothbrushes. Other types of oral care device however include, by way of non-limiting example, powered flossing devices, oral irrigators, oral treatment devices employing use of electromagnetic (EM) energy, such as radio frequency emissions or light, or a combination of these devices. Each of these units also include components which are used in the administration of the oral care function and which can wear over time, e.g. mechanical cleaning elements such as bristles, nozzles, applicators, reflectors, or radiation output surfaces.

One developing class of oral care device is that of mouthpiece units. These typically have an arcuate (e.g. U-shaped) structure with upper and lower tooth-receiving channels, and typically include curved rows of bristles which follow the shape of the tooth-receiving channels. These allow rapid and thorough cleaning of teeth with reduced effort for the user.

As the mouthpiece wears, performance will reduce and it is advantageous to have functionality for automatically advising a user when the whole mouthpiece, or a particular component of it (e.g. brushing section) should be replaced.

The same problem also arises in the field of toothbrushes and is mainly characterized by bristle splaying.

Developments in the field of wear-out detection for oral care devices are generally sought.

### SUMMARY OF THE INVENTION

The invention is defined by the independent claims. The dependent claims define advantageous embodiments.

According to examples in accordance with an aspect of the disclosure there is provided an oral care system comprising:
a sensor unit adapted to generate an output signal related to or indicative of a cleaning efficacy of an oral cleaning function of the system; and
a processor arranged to:
   receive the output signal from the sensor unit;
   determine one or more pre-defined characteristics of the signal, and
   perform a wear-out assessment comprising determining whether the one or more signal characteristics meet one or more pre-defined criteria, and generating a wear-out feedback signal dependent upon an outcome of the assessment.

Embodiments of the invention are based on determining wear-out based on utilizing an output of a sensor unit or module which is arranged to provide a direct or indirect indication of a cleaning efficacy of cleaning mechanisms of the oral care system. This could for example be a clean-level sensor, or a module which detects operation characteristics of a cleaning mechanism of the device (e.g. drive signal characteristics of an oscillatory movement generator).

The wear-out feedback signal is a wear-out indicator signal indicative of wear of the cleaning elements (e.g. bristles) exceeding a certain threshold.

The invention is based on detecting wear via monitoring characteristics of a signal which is indicative of progress of the oral cleaning efficacy during an operation session (e.g. a clean level in the mouth) and monitoring a length of time that it takes for a certain threshold of efficacy to be reached in a session. If the length of time is over a certain second threshold, this can be an indirect indication that the relevant components of the oral care device are wearing out.

The sensor may determine a cleanliness level or a (time) derivative thereof, e.g. a cleanliness rate. If a cleanliness level is determined, it is monitored how long it takes before a first threshold level of cleanliness is achieved. If a cleanliness rate is determined, it is monitored how long it takes before the cleanliness rate falls below a first threshold level indicating that no meaningful further cleanliness improvement is achieved.

According to embodiments, the determining of the one or more pre-defined signal characteristics may be done during or after a given operation session, and wherein the signal characteristic comprises a duration of time, from the start of the operation session, that the output signal of the sensor unit remains below a pre-defined first threshold.

An operation session may mean when the oral care device is operating in a cleaning or treatment mode. It may correspond to a time when operative or functional components are active for performing an oral care (e.g. cleaning) function.

The one or more pre-defined criteria applied in the wear-out assessment may in some examples comprise a second threshold relating to said time duration, as measured in one or more operation sessions. This (time) threshold can be applied to the duration as measured in a single operation session, or as recorded over a plurality of sessions, e.g. an average over multiple sessions.

As the oral care functionality diminishes due to wear, the length of time it takes during a single session to reach a certain cleaning efficacy level increases. Thus, detecting when this time exceeds a second threshold gives an indirect indication of a threshold level of wear.

The second threshold may be fixed, or the second threshold may be dynamically set before each wear-out assessment. For example, it may be set based on a value of the time duration determined during one or more previous operation sessions. For example, the threshold may be set for detecting a certain threshold change in the duration between subsequent sessions.

Exceeding a threshold may mean rising above a certain threshold or falling below a certain threshold.

In accordance with one or more embodiments, the sensor unit may be adapted to generate an electromagnetic (e.g. optical), acoustic or fluid emission for performing a contact or non-contact physical interaction with surfaces in an oral cavity of a user, and wherein the output signal is dependent upon properties of the interaction of said emission with surfaces in the oral cavity, e.g. tooth, gum or any other (biological) material surface.

In this set of embodiments, the sensor unit could, by way of one example, be a sensor for detecting a cleanliness level of teeth.

The output signal may be based on measurement of one or more detected physical properties of the emission after or during physical interaction with an oral surface.

The signal in this case might be used to give an indication of a clean-level or a plaque level.

In a further set of examples, the sensor unit may include, or be electrically coupled to, one or more operative components of the oral care device which are already adapted to perform an oral care function, e.g. a movement generator which drives oscillatory motion of cleaning elements.

In accordance with one or more embodiments, the sensor unit may comprise a clean-level sensor adapted to perform a contact or non-contact physical interaction with oral surfaces to detect a level of cleanliness of tooth surfaces, and wherein the output signal is indicative of a clean level.

The output signal in this case may be an output signal generated by the sensor.

By way of one set of examples, if the duration of time it takes the clean level to exceed a defined threshold exceeds a second threshold, this may provide an indication that the cleaning elements of the oral care device have exceeded a defined level or threshold of wear.

In some examples, the clean-level sensor may be a plaque-detection sensor.

In accordance with one or more embodiments, the clean-level sensor is a plaque detection sensor adapted to generate a fluid flow for being driven onto or over a tooth surface, and wherein the output signal is based on measurement of a pressure or flow of the generated fluid flow.

The pressure or flow of the fluid (e.g. air) when it is being driven in a stream onto or over the tooth surface provides an indication of plaque level, since with increasing level of tooth cleanliness, the pressure of the fluid flow increases. In particular, (sticky) plaque tends to provide some elastic absorption of the applied fluid pressure. As the tooth surface becomes cleaner, it becomes harder, meaning that measured fluid back-pressure increases. Thus, the pressure of the fluid flow provides an inverse measure of a clean level of tooth surfaces.

In accordance with one or more embodiments, the oral care system may comprise mechanical cleaning elements for mechanical engagement with surfaces in the oral cavity. The oral care system may further comprise a movement generator arranged to drive oscillatory movement of the cleaning elements during an operation session. The movement generator may comprise a motor powered by a drive circuit. The sensor unit in this case may be provided coupled to the drive circuit, and wherein the output signal is indicative of one or more electrical characteristics of the drive circuit.

Properties such as current or voltage of the drive circuit may fluctuate during operation of the device for cleaning the teeth. However, as a clean level increases, these properties may stabilize. This stabilization thus gives an indication of clean level. Thus, the output signal of the sensor unit, coupled to the drive circuit, is related to or indicative of cleaning efficacy.

In accordance with one or more embodiments, determination of the one or more signal characteristics may be done during or after each operation session, and wherein the wear-out assessment is based on the signal characteristics detected over a plurality of operation sessions.

For example, it may be based on an average of the one or more signal characteristics over multiple sessions, for example an average of a defined number of most recent operation sessions, or an average over a defined recent time period (e.g. average over one week).

The determination may be performed every operation session, and its results stored in a local or remote memory. The determination may be further utilized in some examples to provide an end-of-cleaning indicator, indicating that the mouth is sufficiently clean and the cleaning session can end. This may be used to generate a sensory feedback output to a user, or may be used to automatically cease an active cleaning operation of the device, e.g. to deactivate oscillation of cleaning elements of the device.

The wear out assessment may be performed automatically after or during every operation session, or it may be done less frequently, for example every week, or every two days.

In accordance with one or more embodiments, the oral care system may comprise an oral care device including at least a portion for being received in an oral cavity of a user, and wherein the oral care device comprises the sensor unit.

The processor may be comprised by the oral care device, so that the two form a single unit. Alternatively, the processor may be external to the oral care device, for example it may be a processor of a mobile computing device belonging to the user, and adapted to operatively communicate with the oral care device.

In accordance with one or more embodiments, the oral care device may comprise a mouthpiece unit for being received in the oral cavity of a user. The mouthpiece unit may be U-shaped and may include upper and lower tooth-receiving channels, with a biting surface disposed between the two channels, forming a base for each of the channels.

The mouthpiece unit may comprise a plurality of cleaning elements protruding into the tooth-receiving channels for mechanical engagement with tooth surfaces during an operation session. The cleaning elements may comprise cleaning filaments. The cleaning elements may be bristles or bristle bundles, or any other mechanical element being able to exert forces onto oral surfaces.

Examples in accordance with a further aspect of the invention provide a method for detecting wear-out in an oral care device. The method comprises receiving an output signal from a sensor unit, the sensor unit adapted in use to generate an output signal related to or indicative of a cleaning efficacy of an oral cleaning function of the system. The method further comprises determining one or more pre-defined characteristics of the signal. The method further comprises performing a wear-out assessment comprising determining whether the one or more signal characteristics meet one or more pre-defined criteria, and generating a wear-out feedback signal dependent upon an outcome of the assessment.

Examples in accordance with a further aspect of the invention provide a computer program product comprising computer program code, the computer program code being executable on a processor, and the code configured to cause the processor to perform a method in accordance with any example or embodiment outlined above or described below, or in accordance with any claim of this application.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying schematic drawings, in which:
Fig. 1 outlines components of an example system including a processor in accordance with one or more embodiments of the invention;
Fig. 2 shows an example graph of a sensor unit output signal over an operation session, and a time duration, Δt, for the signal to reach a pre-defined threshold;
Fig. 3 shows an example graph of change in the time duration, Δt, over multiple operation sessions, and an example second threshold for the time duration;
Figs. 4-6 show examples of a tube for use in a fluid-based plaque detector;
Fig. 7 shows components of an example fluid-based plaque detector;
Fig. 8 shows an example oral care device comprising a fluid-based plaque detector, including a plurality of fluid outlet pipes; and
Fig. 9 shows an example oral care device comprising an optical emission based plaque sensor, the sensor comprising a plurality of optical sensing elements.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method and processor for performing a wear-out assessment for an oral care device (e.g. an oral cleaning device). An output signal is received from a sensor unit of the oral care device which, in operation, is adapted to provide an output related to a cleaning efficacy of a cleaning function of the oral care device. The sensor unit may be, or may be coupled to, a component which is used during execution of an oral care function of the device, for example a sensor for detecting cleaning progress in the mouth, or a component which drives a cleaning or treatment action in the mouth. The signal is used for performing a wear-out assessment. As relevant components used by the device for the oral care function wear, characteristics of the signal may change in a predictable way, this can be used to identify when a wear-out state has been reached.

The output signal of the sensor unit may in some examples be based on properties of a functional component which is comprised by the oral care device, and active during operation for oral care. It is anticipated that the functional component may be a component which is used as part of the normal oral care operation of the oral care device. Most oral care devices include at least one component which performs contact or non-contact physical interaction with dental or other oral surfaces. It is one realization of the inventors that characteristics of a signal representative of this physical interaction can usefully be utilized for a secondary purpose of determining wear-out of components of the device. For example, wear-out can be detected of cleaning elements of the device in the case that the device is an oral cleaning device. Cleaning elements may for example include filaments or protrusions designed to rub against tooth surfaces for a cleaning function. However, in other examples, wear-out may be wear-out of other components. In general, wear-out results in diminution of the efficacy of the oral care function being provided by the device, e.g. diminished cleaning efficacy arising from for example mechanical deformation, splaying, abrasion, degradation of cleaning elements.

Embodiments of the invention are applicable to a range of different oral care devices, which may be adapted to perform for example oral cleaning and/or treatment functions.

One emerging class of oral care device is that of automatic tooth brushing mouthpieces. These comprise a U-shaped cleaning portion which comprises cleaning elements such as bristles and is arranged to be received in the mouth, with upper and lower rows of teeth received within upper and lower tooth receiving channels, and with bristles projecting into the channels to provide a brushing function. This provides faster brushing times and greater ease-of-use for a user.

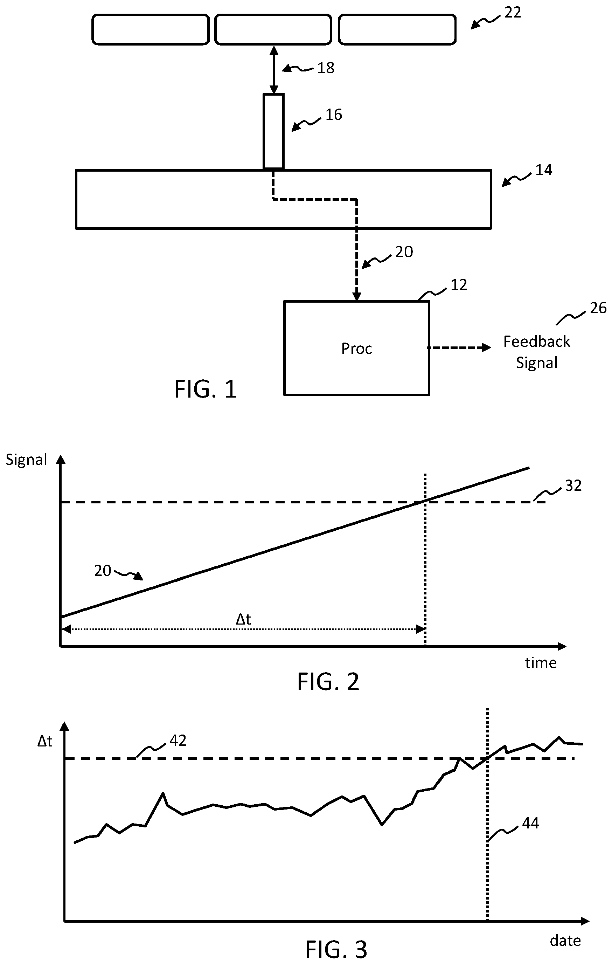

Fig. 1 schematically depicts the basic components of an example oral care system as may be provided according to one aspect of the invention. The system includes a processor 12 which is arranged to receive a signal 20 from a sensor unit 16, the sensor unit being comprised by the oral care device 14.

A further aspect of the disclosure provides the processor 12 alone. The processor may for example include a communication module or input/output adapted to connect in operation to the sensor unit 16 to receive the signal 20.

A further aspect of the disclosure may provide an oral care system comprising the oral care device 14 (with sensor unit) and the processor 12 operatively coupled in operation to the sensor unit 16.

The processor 12 is adapted to determine one or more pre-defined characteristics of the output signal 20, and perform a wear-out assessment comprising determining whether the one or more signal characteristics meet one or more pre-defined criteria. The processor is further adapted to generate a wear-out feedback signal 26 dependent upon an outcome of the assessment. For example, the processor may generate the feedback signal only in the case of a positive outcome of the wear-out assessment (i.e. in the case that wear-out has been detected).

The sensor unit 16 may in some cases be adapted during operation to perform a contact or non-contact physical interaction 18 with surfaces of teeth 22 in an oral cavity of a user (e.g. as illustrated in Fig. 1). The sensor unit may in some further cases be signally coupled to a functional component which performs such a contact or non-contact physical interaction 18 with surfaces of teeth 22. The output signal 20 may in some examples be dependent upon properties of the physical interaction. These represent example options only and other configurations are possible.

Examples of a non-contact physical interaction might be for example use of acoustic or electromagnetic waves or emissions emitted from a sensor unit, and wherein reflections thereof are detected by the sensor unit. Examples of a contact physical interaction might be for example a piezoelectric sensor integrated at the distal end of a cleaning element which is arranged to be rubbed against the surface of the teeth, where the piezoelectric sensor comes into direct contact with the teeth. Another example of a contact physical interaction may be a drivetrain mechanism which drives physical movement of cleaning elements against surfaces of teeth, or a fluid sensor to detect plaque. The output signal may be an electrical characteristic of the actuator drive circuit, which may fluctuate depending upon properties of the interaction between the cleaning elements and the teeth surfaces.

Reference in this disclosure to an operation session may correspond to a period in which the oral care device is operating in a cleaning or treatment mode. It may correspond to a time when operative or functional components are active for performing an oral care function. For example, it may correspond to a time at which a movement generator is driving oscillation of cleaning elements of the oral care device.

The feedback signal 26 may be a sensory output signal, for example a control signal for controlling a sensory output device to generate sensory stimulus for communicating a positive outcome of the wear-out assessment to a user. This may, by way of non-limiting example, comprise a visual output, for example illuminating one or more lighting elements, or an acoustic output, for example an alert sound, or a tactile or haptic output such as the vibration generated by vibrator within the oral care device.

In general, the wear-out assessment may be performed during or after each operation session, or it may be performed less regularly. For example, it may be performed after every x number of operation sessions, may be performed at regular intervals of time, for example every week, or once every day, or once every two weeks.

There are a variety of different options for the sensor unit. A number of different examples will be outlined in more detail below to aid understanding of the range of possibilities encompassed by the broad inventive concept outlined above.

The invention is based on detecting wear via monitoring characteristics of a signal which is directly indicative of progress of the oral cleaning efficacy during an operation session (e.g. a clean level in a mouth) and monitoring a length of time that it takes for a certain threshold of efficacy to be reached in a session. If the length of time is over a certain second threshold, this can be an indication that the relevant components of the oral care device are wearing out.

There are a range of options with regards to the sensor unit and corresponding output signal.

The different embodiments will now be outlined in more detail.

According to one group of embodiments, the determining of one or more pre-defined characteristics of the output signal is performed during or after a given operation session of the oral care device, and wherein the characteristic of the output signal which is determined comprises a duration of time (Δt), from the start of the operation session, that the signal remains below a pre-defined first threshold. In other words, it is the length of time that it takes, from the start of the operation session, for the output signal to reach said defined first threshold.

This is illustrated schematically in Fig. 2, which shows a schematic graph of the output signal 20 (y-axis) as a function of time (x-axis). The output signal relates to a real-time cleaning efficacy. The first threshold is illustrated by the horizontal dashed line 32. The illustration, the output signal is shown as increasing in a linear fashion, however in practice it may follow a less ordered pattern, and may follow a path which is generally nonlinear. Fig. 2 illustrates the duration of time Δt, between a start of the operation session and the point at which the signal 20 meets or exceeds the first threshold 32.

Thus, the signal characteristic derived in this group of embodiments is the time duration Δt. The wear-out assessment comprises assessing one or more pre-defined criteria related to this time duration Δt. By way of one example, the pre-defined criterion may be a second threshold relating to said duration in one or more operation sessions. The second threshold may relate to the time duration in any single operation session, or may relate to the time duration over a plurality of operation sessions, for example an average or other statistical property derived from the durations over a plurality of sessions, or a trend in the duration over multiple sessions, or a relative change in the duration from a certain number of sessions previously.

Fig. 3 schematically illustrates the case where the predefined criteria used in the wear-out assessment pertain to a second threshold 42 for time duration Δt as measured in any single operating session. This is illustrated using a graph which shows the time duration Δt, (y-axis) as a function of the date (x-axis) of a series of operating sessions of the oral care device. A vertical line 44 illustrates the operation session at which the time duration Δt exceeds the second threshold 42. When this occurs, the wear-out assessment applied by the processor 12 would have a positive outcome, and the processor would therefore be adapted to generate the feedback signal 26 responsive to this.

In relation to this group of embodiments, there are different options for the nature of the sensor unit 16 and the output signal 20 which is used.

According to one advantageous set of examples, the sensor unit 16 may be a physical clean-level sensor, which is adapted to detect a level of cleanliness of tooth surfaces in the mouth. It may be adapted to detect this continuously or recurrently throughout an operation session of the oral care device. The time duration Δt in this case corresponds to a time duration taken for the clean-level, or a parameter related thereto, to reach a defined threshold. Thus, in this set of examples, the oral care device may be an oral cleaning device for performing a cleaning function, e.g. for cleaning surfaces of teeth. For instance, it may be a toothbrush or a cleaning mouthpiece device (as discussed above). The operation session of the device may therefore be an oral cleaning session.

The length of time that it takes from the start of the operation session in order to reach a certain threshold level of cleanliness of the tooth surfaces gives an indication of the cleaning efficiency of the oral care device. This in turn gives an indication of the wear-out state of the relevant components of the oral care device which perform the cleaning function. If these are worn, cleaning efficiency declines, meaning that a longer period of time is needed to reach a predefined level of tooth cleanliness. In some examples, the device components whose wear is indirectly monitored in this manner could correspond to protruding cleaning elements of the device which are adapted to be rubbed against surfaces of teeth in order to mechanically clean them. Cleaning elements may be cleaning filaments, for example bristles. It is well known that bristles undergo wear, leading to splaying of the bristles, which reduces cleaning efficiency. In general, once this performance degradation has started, it will increase steadily. Another example may include a nozzle of an oral irrigator powered flossing device. Wear of a nozzle of the device may correspond for example to build up of limescale within the nozzle, leading to a decline in cleaning efficiency. In similar fashion, the length of time required to reach the predefined cleaning efficacy threshold 32 gives an indication of reduction in cleaning efficiency and therefore wear of the relevant cleaning components.

In some examples, the processor 12 may be adapted to identify and eliminate outlier values of the time duration Δt based on one or more outlier detection criteria. For example, there may be specific occasions at which the time duration to reach the clean level threshold 32 may occasionally increase. For example, if the plaque build-up was unusually high due to e.g. food and drink intake over the previous period, or if there was a longer than usual interval between two consecutive cleaning sessions.

The processor 12 may identify outliers of the first kind, based on detecting whether the time duration Δt in an operation session, subsequent to one in which a high Δt is measured, falls back to a lower level. In another example, the processor may be adapted to calculate a running baseline or trend in the duration Δt after each operation session, and use the baseline or trend as the value assessed in the wear-out assessment instead of the raw Δt value.

The processor 12 may identify outliers of the second kind based on keeping a log of times of operation sessions, allowing detection of an operation session which occur a longer interval than usual from the previous session. This information can be used to identify and exclude Δt values which occur during such a session following an interval which exceeds some threshold interval time, for example.

It is noted however that a clean level sensor represents just one example that is compatible with this group of embodiments. Another possible example includes a sensor module which measures electrical characteristics (e.g. current, voltage, impedance) of a drive circuit for an actuator driving movement of cleaning elements. As teeth are progressively cleaned, the electrical properties change, and thus wear of cleaning components can be linked to the time duration for a certain characteristic to reach a threshold 32 level.

In embodiments in which the sensor unit is a clean-level sensor, this may be a plaque detection sensor.

In some examples, the clean level sensor which is used as the sensor unit 16 may be a sensor which is used during the normal cleaning operation of the device for the purpose of detecting when the end of the cleaning session has been reached. For example, the clean level sensor can be used to detect when a threshold cleanliness has been reached, meaning that the cleaning session can be terminated, for example automatically. This may comprise for example deactivating a movement generator which is driving mechanical oscillation of cleaning elements of the device. In some embodiments, the determining of the duration of time Δt can be done responsive to this detection of the end of the cleaning session.

The duration Δt detected in each cleaning session may be recorded or logged in a local memory.

In accordance with one or more embodiments, the sensor unit 16 may be adapted to generate an electromagnetic (e.g. optical), acoustic or fluid emission for performing a contact or non-contact physical interaction with surfaces in an oral cavity of a user, and wherein the signal is indicative of properties of the interaction of said emission with surfaces.

The sensor unit 16 could be clean level sensor which utilizes such an emission for performing the sensing of cleanliness of oral surfaces. In other examples, the sensor unit may be signally coupled to a further functional component which generates emissions to perform a cleaning or treatment function, for example an oral irrigation device or powered flosser which generates a fluid emission for a cleaning function, or an RF treatment device which uses an RF emission to treat gums.

One example sensor unit, taking the form of a clean level sensor which uses a fluid emission to sense real-time cleaning efficacy, will now be described.

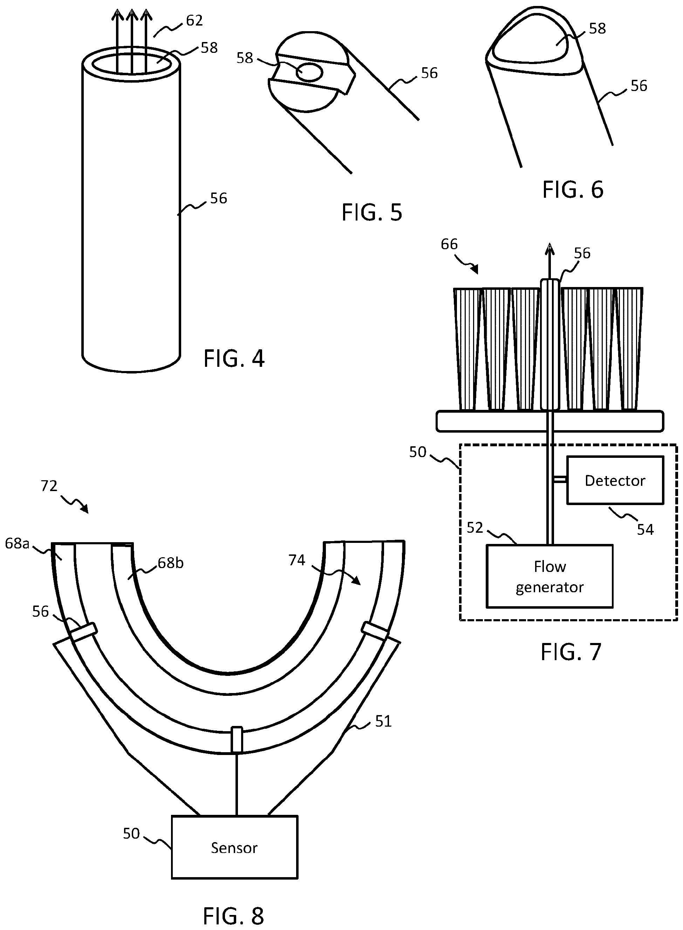

This example is illustrated schematically in Figs. 4-8.

In this example, the sensor unit 16 is plaque detection sensor adapted to generate a fluid flow for being driven onto or over a tooth surface, and wherein the output signal is based on a fluid impinging the tooth surface and measurement of a pressure or flow of the generated fluid flow. The fluid may be air (or another gas) in some examples. When plaque is present on the surface of teeth, the teeth are stickier (surface fluid elasticity is greater). The effect of this is that when passing fluid onto or over the tooth surface, elastic absorption of the fluid pressure by the surface is higher relative to a tooth surface without the plaque, and this leads to a measurable reduction in the pressure of the fluid compared to a state in which the tooth surface is clean. Thus, this sensor can be used to sense a level of plaque on the tooth based on the pressure and/or flow characteristics of the fluid stream being passed onto or over the tooth surface. As the tooth becomes progressively cleaner (reduced plaque), the pressure progressively increases (along with a decreasing flow rate).

The fluid-based plaque sensor may comprise a tube 56 arranged to outwardly protrude from a surface of a portion of the oral care device which is received in the mouth during operation. A distal end of the tube is open 58, permitting outflow of a stream of fluid 62 from the end of the tube, for interaction with a tooth surface. The tube is arranged so that during normal operation of the oral care device in the mouth, the end of the tube is arranged to engage against tooth surfaces. For example, it may be integrated within a bristle field 66 of the device, as shown in Fig. 7, so that when the bristles are engaged against tooth surfaces for cleaning the teeth, opening 58 at the end of the tube is automatically also engaged against the tooth surface.

The end of the tube 56 may be shaped to ease the engagement of the fluid opening 58 operatively against the tooth surface. For example, Fig. 5 shows one example in which the end of the tube features a recessed channel running diametrically across a distal face of the tube, and wherein the opening 58 is located at a middle region of a base of said recessed channel. This enables an upper side of the channel to engage operatively against the tooth surface and provides for an area of fluid engagement against the tooth that is larger than the size of the opening itself, and a different shape (i.e. linear in this case). Fig. 6 shows a further example, in which the end of the tube is chamfered at two opposing sides of the tube opening 58, which provides for easier engagement of the opening 58 against the tooth surface, even if the tube is engaged against the surface from an oblique angle.

With reference to Fig. 7, the plaque sensor in this example comprises a sensing module 50 which is fluidly coupled to the tube 56, with the tube arranged physically protruding out of the surface of the oral care device. The sensor module comprises a fluid flow generator 52 (preferably a flow generator) which is arranged to provide a pressurized fluid flow through the length of the tube toward the distal end of the tube comprising the opening 58. The sensor module further comprises a detector element 54 which is arranged to sense a pressure or flow of the fluid flowing through the tube 56. The detector may be arranged to sense the fluid flow or pressure at a location between the flow generator and a proximal end of the tube 56, for example it may sense one or both of these properties within a conduit which extends between the flow generator and the proximal end of the tube 56.

The detector 54 may generate an output signal indicative of the sensed pressure or flow. Alternatively, it may generate an output signal indicative of a level of plaque on the teeth, this determined by the detector based on the sensed pressure or flow of the fluid. The output signal from the detector may provide the input signal 20 to the processor for use in assessing wear-out.

By way of further illustration, examples of suitable fluid-based plaque detection sensors are described in detail in each of the documents: WO 2014/097240, WO 2014/097241, and WO 2014/097031.

In advantageous examples, the plaque sensor may comprise a plurality of the tubes 56, to permit a plaque level to be sensed at multiple different tooth surface locations. The plaque level could be sensed simultaneously at multiple locations, or the plurality of tubes could permit plaque level to be sensed any one or more of the locations.

One example is schematically illustrated in Fig. 8. This example depicts an oral care device in the form of a brushing mouthpiece device 72. The figure shows a plan view of the mouthpiece. The mouthpiece device comprises a U-shaped cleaning portion for being received in the oral cavity. This cleaning portion comprises upper and lower tooth receiving channels. Only the upper 74 tooth receiving channel is shown in Fig. 8. Protruding into the tooth receiving channels from opposing walls delimiting the channel are opposing rows of bristles, which form a first bristle field 68a and a second bristle field 68b. When teeth are received in the channel, the bristle fields protrude to make contact with surfaces of the teeth on both the buccal and lingual sides.

As shown, the mouthpiece includes a plaque sensing arrangement, which comprises a sensing module 50 which is fluidly coupled to a plurality of tubes 56 (in accordance with the descriptions outlined above). Fluid conduits or pipes 51 extend between the sensing module 50 and the tubes 56 to carry the fluid flow for performing the plaque sensing. The tubes are arranged at a series of different spatial locations around the tooth receiving channel to permit detecting plaque at multiple different regions of the row of teeth which is received in the mouthpiece channel in operation. The plurality of tubes 56 may be fluidly connected in parallel or in series to a flow generator 52 (not shown in Fig. 8) comprised by the sensor module 50.

The tubes 56 at the plurality of positions could be used to sense plaque at multiple positions at once. The output signal 20 received by the processor 12 may be a signal relating to an average plaque level sensed across all positions for example. Alternatively, the plaque level at just a subset of one or more of the tube 56 locations could be used to provide the signal 20.

By way of one advantageous example, the plaque sensor may be adapted to utilize plaque sensor readings from a tube 56 location at which, during one or more previous cleaning sessions, the sensed plaque level declined most slowly over the course of the cleaning session, or a location where a larger amount of plaque was sensed to be present at the end of the cleaning session than any other location. These locations may correspond to places which tend to accumulate the most plaque, or where cleaning is more awkward. This could be based on previously recorded data from previous cleaning sessions, for example stored in a local memory of the sensor or the processor 12, or the oral cleaning device. By using the particular sensing location at which plaque removal was sensed to occur more slowly or less effectively, this ensures that, when monitoring the signal 20 to detect when clean level has reached the defined threshold 32, the clean level is one which has been reached all areas of the mouth, including the area sensed as being the slowest or most difficult to clean.

In some examples, where the mouthpiece unit is a custom-made mouthpiece, the sensing locations could be configured according to locations that a dental professional knows are spots which may accumulate more plaque or may be difficult to clean.

In accordance with a further set of one or more examples, the sensor unit 16 may take the form of a clean level sensor, and wherein the clean level sensor is a plaque sensor which uses optical (or other electromagnetic) emissions to detect a plaque level. In particular, the plaque level sensor may include one or more optical sources arranged to generate an optical output for being received on tooth surfaces during use of the oral care device. The sensor unit may further include an optical (or other EM) sensing element arranged to sense a reflection of the optical (or other EM) emission back from the tooth. Based on properties of the reflected optical signal, a level of plaque can be sensed. For example, a tooth surface with a plaque covering has different optical scatter properties compared to a clean tooth surface. It may also have different fluorescence properties. These differing properties have a detectable impact on optical properties of a reflected optical signal, for a source optical signal which is fixed in respect of these properties. This thus allows a plaque level on the teeth to be sensed.

An example of an optical plaque detector suitable for use in accordance with embodiments of the invention may be found in the documents: WO 2014/097135, WO 2014/097045, or WO 2015/056197.

In advantageous examples, an oral care device may comprise a plurality of plaque sensing elements 82, each having an optical source to generate an optical emission, and an optical sensing element to sense a reflection of emission from a tooth surface. The or each plaque sensing element may be operatively coupled to an optical sensor module 80 which is adapted to generate a sensor output indicative of the relevant optical property of the reflected waves which is sensed, or indicative of a plaque level. This output signal may be used as for performing the wear-out assessment.

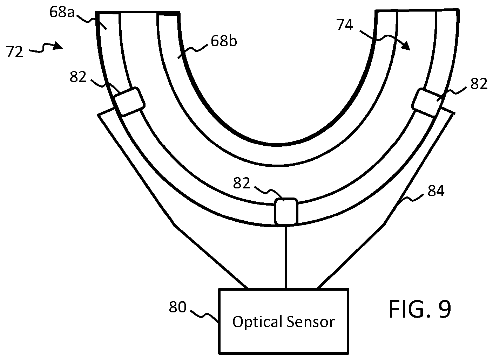

Fig. 9 illustrates one example oral care device comprising a plurality of plaque sensing elements 82, connected to an optical sensing module 80. This device is in the form of a brushing mouthpiece device 72. The components of the mouthpiece are otherwise the same as that depicted in Fig. 8 above.

The plurality of plaque sensing elements 82 are arranged at a series of different spatial locations around the tooth receiving channel 74 of the mouthpiece to permit detecting plaque at multiple different regions of the row of teeth which is received in the mouthpiece channel. The plurality of plaque sensing element 82 may be connected in parallel or in series to the optical sensing module 80. The sensing elements may be electrically connected. Alternatively, in some examples, the optical source comprised by each sensing element 82 may be optically supplied by an optical generator in the sensor module 80, and wherein the sensing elements 82 are optically coupled to the optical sensing module 80 via respective optical fibers 84.

The plaque sensing elements 82 at the plurality of positions could be used to sense plaque at multiple positions at once. The signal 20 received by the processor 12 may be a signal relating to an average plaque level sensed across all positions for example. Alternatively, the plaque level at just a subset of one or more of the sensing element 82 locations could be used to provide the signal 20. In relation to this feature, the same options as outlined above in relation to Fig. 8 can be applied. For brevity, these will not be repeated again here.

In some examples, as in the example clean-level sensors outlined above, the signal from the sensor unit may be utilized by a controller of the oral care device to trigger deactivation of active oral care components (e.g. cleaning components), thereby bringing the operation session (e.g. cleaning session) to an end. This may comprise deactivating oscillation of bristles of an oral cleaning device such as a mouthpiece device.

In further examples, the sensing unit 16 may detect a clean level of the teeth (e.g. plaque) only indirectly. It may not be adapted to use an emission, but may utilize another functional component of the oral care device.

By way of example, the oral care system may comprise a plurality of mechanical cleaning elements for mechanical engagement with surfaces in the oral cavity, and may further comprise a movement generator arranged to drive oscillatory movement of the cleaning elements during an operation session, the movement generator having a motor powered by a drive circuit. The sensor unit in this case may be signally coupled to the drive circuit, and wherein the output signal is indicative of one or more electrical characteristics of the drive circuit.

In particular, properties such as current or voltage of the drive circuit may fluctuate during operation of the device for cleaning the teeth. For example, the current or voltage may be superimposed by transient cleaning-related signal components. However, as a clean level increases, these properties may stabilize (due to the changing surface properties of the teeth). This stabilization thus gives an indication of increasing clean level. Hence, here, the one or more pre-defined characteristics of the signal 20 determined by the processor 12 may be a stability of one or more electrical characteristics of the signal, for example an amplitude of the signal about a baseline, or a different measure of variability of the signal as a function of time (e.g. signal-to-noise ratio) or signal frequency (e.g. derived from a Fast-Fourier-Transform FFT analysis). The time duration, Δt, computed by the processor may represent the time taken for the measure of signal variability to fall below a particular threshold, or for a measure of signal stability to exceed particular threshold.

By way of a further example, the oral care device may comprise one or more cleaning elements upstanding from a surface of the oral care device arranged to be received within the oral cavity during use, and the cleaning elements arranged to mechanically engage against surfaces of teeth to perform a cleaning function. The sensor unit may comprise one or more piezoelectric elements mounted on one or more of the cleaning elements, or adjacent to one or more cleaning elements, for example in set within a bristle field of the cleaning device. In this example, changes in the mechanical movement characteristics of the bristles of the oral cleaning device are monitored during an operation session, and changes in the detected movement characteristics can be used to indirectly detect progress of cleaning. As the tooth surfaces become cleaner, the movement characteristics of the bristles over the tooth surfaces vary, due to the changing friction characteristics of the surfaces (i.e. the teeth become smoother). In particular, properties such as the vibration frequency or amplitude of the bristles may change as the teeth become clean. For example, it is expected that the brushing amplitude increases as the plaque is removed. In all cases, there will be a stabilization of such properties as the mouth becomes clean. This stabilization can be used as an indirect measure of the clean level. The signal characteristic computed by the processor may be a signal indicative of stability or variability of the signal received from one or more piezoelectric elements over time during the operation session. The time duration Δt, determined by the processor 12 may correspond to time taken for the signal stability to exceed a predefined threshold, or for the signal variability to fall below a predefined threshold.

In accordance with one or more examples, the one or more signal characteristics determined by the processor 12 in the wear-out assessment may be related to friction characteristics of the tooth surfaces. More particularly, the processor may be adapted to determine a characteristic indicative of a stick/slip motion of the bristles over the tooth surfaces. Stick/slip is a phenomenon that occurs when rubbing two surfaces against one another, and occurs where the coefficient of friction between the surfaces is sufficiently high that transient sticking recurrently occurs between contact points of the two surfaces in relative motion to each other. Where the frequency of sticking events is higher, this is an indication that static friction between the surfaces is higher. In the case of cleaning of teeth, it is to be expected that stick/slip will reduce as cleaning progresses, since more sticky plaque is removed through the cleaning. Such a stick/slip motion can be detected for example by monitoring the movement patterns or characteristics of cleaning elements such as bristles. This can be detected for example using electrical characteristics of the signal output from piezoelectric (force) sensors as described above or electrical characteristics of the drive circuit for the movement generator as described above, or from acoustic analysis of the drive signals in the drive circuit for a movement generator.

In accordance with one or more examples, the oral care device may comprise one or more triboelectric generation elements, adapted to harvest kinetic energy from bristle movement to generate electrical charge. The triboelectric elements may be arranged to harvest kinetic energy associated with movement between cleaning elements and tooth surfaces or between neighboring cleaning elements comprised by the cleaning device for example. An electrical signal generated by the triboelectric elements can be used as the output signal 20 provided to the processor 12, and the processor may determine signal characteristics of this triboelectric generator signal. The triboelectric elements may form the sensor unit in this case, or a sensing module electrically coupled to outputs of the triboelectric elements may be used a sensor unit.

As the tooth surfaces become cleaner, there may be changes in the triboelectric charging characteristics, which are reflected in the electrical characteristics of the signal from the triboelectric elements. In particular, properties such as the triboelectric charge or voltage may change as the teeth become clean or the cleaning elements may be worn out (excessive splaying of filaments reducing the triboelectric potential due to less fiber-fiber contact). In all cases there will be a stabilization of such properties as the mouth becomes clean. A stability or variability of the triboelectric generator signal can be used as the signal characteristic computed by the processor 12 for determining the time duration Δt.

In accordance with any of the above-described embodiments, the processor 12 may be adapted to determine the time duration Δt, during each operation session. Where the sensor unit 16 is a clean level sensor, for example a plaque detector, this may thus provide a dataset showing changes in the time required to clean the teeth to a predefined level. In accordance with one or more embodiments, this dataset may be used for a health analysis function.

For example, it can be used to give an indication of changes in oral health or general health relating to the user. The processor 12 may be adapted to perform an oral health assessment at regular intervals, or upon receipt of a trigger signal, e.g. from as user interface.

By way of example, cleaning time, Δt, typically depends upon the amount of or thickness of plaque present on teeth and the mechanical properties of the plaque. A longer cleaning duration may therefore indicate that dental plaque has thickened. If this persists over an extended period of time, this may be an indication that general health or lifestyle may have changed. For example, it may indicate an increased intake of sugars, or a reduction in the plaque suppressing qualities of the saliva (e.g. increased acidity). This may in turn change a health risk profile of the user. The information may be communicated to a dental professional or other health professional, e.g. via a remote data communication channel.

By way of further example, a shorter cleaning duration may indicate that plaque has become weaker, which may be as a consequence of improved lifestyle (e.g. lower sugar intake), but may also be a consequence of low calcium concentrations in saliva, caused by calcium deficiency.

Trends in the measured time duration, Δt, may be detected by the processor 12 in a health assessment procedure, and this used to generate feedback for communication to a user and/or health professional regarding changes. For example, a warning may be issued to the user in case a decline in heath state is detected.

To perform the health assessment procedure, it may be necessary to isolate changes to the cleaning time duration, Δt, which are caused by health or lifestyle factors from changes due to increasing wear of components of the oral care device. Both of these factors may lead to changes over time in the time duration, Δt. One way of doing this, is to use prior information about the expected rate of change of the time duration due to wear of the cleaning components. Any changes which occur more rapidly in a consistent fashion can be assumed to be related to health or lifestyle factors rather than wear of the components.

For example, it may be known in advance that cleaning elements of the device will slowly degrade over a period of 3-6 months. Therefore, a significant change in the cleaning time duration within a period of for example two weeks may be determined by the processor 12 as being associated with health or lifestyle factors. More generally, any change in the time duration which follows a temporal pattern which is different from that expected due to wear-out of the components can be determined by the processor 12 as being associated with health or lifestyle factors

The above embodiments are based on detecting a time duration for a signal characteristic to reach a predefined threshold 32, and wherein the wear-out assessment comprises determining when the time duration meets one or more predefined criteria.

By way of example, the sensor unit may be a clean level sensor, for example a plaque detection sensor. However, in other examples, it could be a sensor module coupled electrically to the control circuit of an emission-based interaction component having a different function, for example an element which generates the emission for a cleaning or treatment function, e.g. an RF cleaning emission.

The wear-out assessment may comprise assessing the relevant signal characteristic as measured in a single testing session, or as measured over multiple testing sessions, for example spanning multiple days. For example, an average or other statistical property of the relevant signal characteristic may be calculated with respect to values acquired over a predefined period of time, such as a week or month. The deviation of this average value or statistical property from the predefined baseline may be determined in order to perform the wear-out assessment.

In accordance with one or more embodiments, the oral care system may comprise an oral care device including at least a portion for being received in an oral cavity of a user, wherein the oral care device comprises the sensor unit.

The processor of the oral care system may be comprised by the oral care device, so that the two form a single unit. Alternatively, the processor may be external to the oral care device, for example it may be a processor of a mobile computing device belonging to the user, and adapted to operatively communicate with the oral care device.

In accordance with one or more embodiments, the oral care device may comprise a mouthpiece unit for being received in the oral cavity of a user.

The mouthpiece unit may be U-shaped and may include upper and lower tooth-receiving channels, with a biting surface disposed between the two channels, forming a base for each of the channels. It may alternatively be a J-shaped partial mouthpiece unit in further examples.

The mouthpiece unit may comprise a plurality of cleaning elements for rubbing against tooth surfaces during an operation session. The cleaning elements may comprise cleaning filaments. The cleaning elements may be bristles or bristle bundles.

The oral care device may include a movement generator for driving oscillatory movement of the bristles over the tooth surfaces.

Examples in accordance with a further aspect of the disclosure provide a method for detecting wear-out in an oral care device. The method comprises: receiving an output signal from a sensor unit, the sensor unit adapted in use to generate an output signal related to a cleaning efficacy of an oral cleaning function of the system. The method further comprises determining one or more pre-defined characteristics of the signal. The method further comprises performing a wear-out assessment comprising determining whether the one or more signal characteristics meet one or more pre-defined criteria, and generating a wear-out feedback signal dependent upon an outcome of the assessment.

Examples in accordance with a further aspect of the disclosure provide a computer program product comprising computer program code, the computer program code being executable on a processor, and the code configured to cause the processor to perform a method in accordance with any example or embodiment outlined above or described below, or in accordance with any claim of this application.

Embodiments of the disclosure described above employ a processor. The processor can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. Measures recited in mutually different dependent claims can be advantageously combined. A computer program may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. An oral care system (14) comprising:
means (66, 72) for performing an oral cleaning of a surface in an oral cavity;
a sensor unit (16) adapted to generate a sensor signal (20) related to a cleanliness level of the surface; and **characterized by**
a processor (12) arranged to perform a wear-out assessment regarding cleaning elements of the oral care system, the wear-out assessment comprising monitoring a length of time (Δt) during an operation session of the oral care system that it takes for the sensor signal (20) to reach a pre-defined first threshold (32), to generate a wear-out feedback signal (26) dependent upon an outcome of the wear-out assessment.

2. An oral care system (14) as claimed in claim 1, wherein the sensor unit (16) is adapted to generate an electromagnetic, acoustic or fluid emission for performing a contact or non-contact physical interaction with surfaces in an oral cavity of a user, and wherein the sensor signal (20) is dependent upon properties of the interaction of said emission with surfaces in the oral cavity.

3. An oral care system (14) as claimed in any of claims 1-2, wherein the sensor unit (16) comprises a plaque-detection sensor.

4. An oral care system (14) as claimed in claim 3, wherein the plaque detection sensor is adapted to generate a fluid flow for being driven onto or over a tooth surface, and wherein the sensor signal (20) is based on measurement of a pressure or flow of the generated fluid flow.

5. An oral care system (14) as claimed in any of claims 1-4, wherein
the oral care system (14) comprises mechanical cleaning elements (66) for mechanical engagement with surfaces in the oral cavity;
the oral care system (14) comprises a movement generator arranged to drive oscillatory movement of the cleaning elements during an operation session, the movement generator having a motor powered by a drive circuit, and
wherein the sensor unit (16) is coupled to the drive circuit, and wherein the sensor signal (20) is based on one or more electrical characteristics of the drive circuit.

6. An oral care system (14) as claimed in any of claims 1-5, wherein the determination of the one or more signal characteristics of the sensor signal is done during or after each operation session, and wherein the wear-out assessment is based on the signal characteristics detected over a plurality of operation sessions.

7. A computer-implemented method for detecting wear-out in an oral care system (14), the method comprising:
receiving a sensor signal (20) from a sensor unit (16), the sensor signal related to a cleanliness level of a surface in an oral cavity that is cleaned by the oral care system;
performing a wear-out assessment regarding cleaning elements of the oral care system, the wear-out assessment comprising monitoring a length of time (Δt) during an operation session of the oral care system that it takes for the sensor signal (20) to reach a pre-defined first threshold (32), and
generating a wear-out feedback signal (26) dependent upon an outcome of the wear-out assessment.

8. A computer program product comprising computer program code, the computer program code being executable on a processor (12) of an oral care system as claimed in any of the claims 1-6, and the code configured to cause the processor (12) to perform a method in accordance with claim 7.

## Patentansprüche

1. Mundpflegesystem (14), umfassend:
Mittel (66, 72) zum Durchführen einer Mundreinigung einer Oberfläche in einem Mundhohlraum;
eine Sensoreinheit (16), die dazu geeignet ist, ein Sensorsignal (20) zu erzeugen, das einen Reinheitsgrad der Oberfläche betrifft; und **gekennzeichnet durch**
einen Prozessor (12), der dazu ausgelegt ist, eine Verschleißbewertung bezüglich Reinigungselementen des Mundpflegesystems durchzuführen, wobei die Verschleißbewertung das Überwachen einer Zeitlänge (Δt) während einer Betriebssitzung des Mundpflegesystems umfasst, die erforderlich ist, damit das Sensorsignal (20) einen vordefinierten ersten Schwellenwert (32) erreicht, um ein Verschleiß-Feedbacksignal (26) in Abhängigkeit von einem Ergebnis der Verschleißbewertung zu erzeugen.

2. Mundpflegesystem (14) nach Anspruch 1, wobei die Zahnsensoreinheit (16) dazu geeignet ist, eine elektromagnetische, akustische oder Flüssigkeitsemission zu erzeugen, um einen Kontakt oder eine berührungslose physische Interaktion mit Oberflächen in einer Mundhöhle eines Benutzers durchzuführen, und wobei das Sensorsignal (20) von Eigenschaften der Interaktion der Emission mit Oberflächen in der Mundhöhle abhängt.

3. Mundpflegesystem (14) nach einem der Ansprüche 1-2, wobei die Sensoreinheit (16) einen Zahnbelagerkennungssensor umfasst.

4. Mundpflegesystem (14) nach Anspruch 3, wobei der Zahnbelagerkennungssensor dazu geeignet ist, einen Fluidstrom zu erzeugen, der auf eine Zahnoberfläche oder über diese getrieben wird, und wobei das Sensorsignal (20) auf der Messung eines Drucks oder einer Strömung des erzeugten Fluidstroms basiert.

5. Mundpflegesystem (14) nach einem der Ansprüche 1-4, wobei
das Mundpflegesystem (14) mechanische Reinigungselemente (66) zum mechanischen Eingreifen in Oberflächen in der Mundhöhle umfasst;
das Mundpflegesystem (14) einen Bewegungsgenerator umfasst, der so ausgelegt ist, dass er während einer Betriebssitzung eine oszillierende Bewegung der Reinigungselemente antreibt, wobei der Bewegungsgenerator einen Motor aufweist, der von einer Treiberschaltung angetrieben wird, und
wobei die Sensoreinheit (16) mit der Treiberschaltung gekoppelt ist und wobei das Sensorsignal (20) auf einem oder mehreren elektrischen Merkmalen der Treiberschaltung basiert.

6. Mundpflegesystem (14) nach einem der Ansprüche 1-5, wobei das Bestimmen des einen oder der mehreren Signalmerkmale des Sensorsignals während oder nach jeder Betriebssitzung erfolgt und wobei die Verschleißbewertung auf den über eine Vielzahl von Betriebssitzungen erfassten Signalmerkmalen basiert.

7. Computerimplementiertes Verfahren zum Erkennen von Verschleiß in einem Mundpflegesystem (14), wobei das Verfahren Folgendes umfasst:
Empfangen eines Sensorsignals (20) von einer Sensoreinheit (16), wobei das Sensorsignal einen Reinheitsgrad einer Oberfläche in einem Hohlraum betrifft, der durch das Mundpflegesystem gereinigt wird;
Durchführen einer Verschleißbewertung bezüglich Reinigungselemente des Mundpflegesystems, wobei die Verschleißbewertung umfasst Überwachen einer Zeitlänge (Δt) während einer Betriebssitzung des Mundpflegesystems, die das Sensorsignal (20) benötigt, um einen vordefinierten ersten Schwellenwert (32) zu erreichen, und
Erzeugen eines Verschleiß-Feedbacksignals (26) in Abhängigkeit von einem Ergebnis der Verschleißbewertung.

8. Computerprogrammprodukt, welches Computerprogrammcode umfasst, wobei der Computerprogrammcode auf einem Prozessor (12) eines Mundpflegesystems nach einem der Ansprüche 1-6 ausführbar ist und der Code dazu konfiguriert ist, den Prozessor (12) zu veranlassen, ein Verfahren nach Anspruch 7 durchzuführen.

## Revendications

1. Système de soins buccaux (14), comprenant :
des moyens (66, 72) pour effectuer un nettoyage buccal d'une surface dans une cavité buccale ;
une unité de capteur (16) adaptée pour générer un signal de capteur (20) lié à un niveau de propreté de la surface ; et **caractérisé par**
un processeur (12) agencé pour effectuer une évaluation d'usure concernant des éléments de nettoyage du système de soins buccaux, l'évaluation d'usure comprenant la surveillance d'une durée (Δt) pendant une session de fonctionnement du système de soins buccaux nécessaire au signal de capteur (20) pour atteindre un premier seuil prédéfini (32) pour générer un signal de rétroaction d'usure (26) dépendant d'un résultat de l'évaluation d'usure.

2. Système de soins buccaux (14) selon la revendication 1, dans lequel l'unité de capteur (16) est adaptée pour générer une émission électromagnétique, acoustique ou de fluide pour effectuer une interaction physique avec ou sans contact avec des surfaces dans une cavité buccale d'un utilisateur et dans lequel le signal de capteur (20) dépend de propriétés de l'interaction de ladite émission avec des surfaces dans la cavité buccale.

3. Système de soins buccaux (14) selon l'une quelconque des revendications 1-2, dans lequel l'unité de capteur (16) comprend un capteur de détection de plaque.

4. Système de soins buccaux (14) selon la revendication 3, dans lequel le capteur de détection de plaque est adapté pour générer un écoulement de fluide destiné à être entraîné sur ou au-dessus d'une surface de dent, et dans lequel le signal de capteur (20) est basé sur la mesure d'une pression ou d'un débit de l'écoulement de fluide généré.

5. Système de soins bucco-dentaires (14) selon l'une quelconque des revendications 1-4, dans lequel
le système de soins buccaux (14) comprend des éléments de nettoyage mécaniques (66) pour un engagement mécanique avec des surfaces de la cavité buccale ;
le système de soins buccaux (14) comprend un générateur de mouvement agencé pour entraîner un mouvement oscillatoire des éléments de nettoyage pendant une séance de fonctionnement, le générateur de mouvement présentant un moteur alimenté par un circuit d'entraînement, et
dans lequel l'unité de capteur (16) est couplée au circuit d'entraînement et dans lequel le signal de capteur (20) est basé sur une ou plusieurs caractéristiques électriques du circuit d'entraînement.

6. Système de soins buccaux (14) selon l'une quelconque des revendications 1-5, dans lequel la détermination des une ou plusieurs caractéristiques de signal du signal de capteur est effectuée pendant ou après chaque session de fonctionnement et dans lequel l'évaluation d'usure est basée sur les caractéristiques de signal détectées sur une pluralité de sessions de fonctionnement.

7. Procédé mis en œuvre par ordinateur pour détecter une usure dans un système de soins buccaux (14), le procédé comprenant :
la réception d'un signal de capteur (20) en provenance d'une unité de capteur (16), le signal de capteur étant lié à un niveau de propreté d'une surface dans une cavité buccale qui est nettoyée par le système de soins buccaux ;
la réalisation d'une évaluation d'usure concernant des éléments de nettoyage du système de soins buccaux, l'évaluation d'usure comprenant la surveillance d'une durée (Δt) pendant une session de fonctionnement du système de soins buccaux nécessaire au signal de capteur (20) pour atteindre un premier seuil prédéfini (32),
la génération d'un signal de rétroaction d'usure (26) dépendant d'un résultat de l'évaluation d'usure.

8. Produit programme informatique comprenant un code de programme informatique, le code de programme informatique étant exécutable sur un processeur (12) d'un système de soins buccaux selon l'une quelconque des revendications 1-6, et le code étant configuré pour amener le processeur (12) à réaliser un procédé selon la revendication 7.
